(19) Europäisches Patentamt / European Patent Office / Office européen des brevets

(11) **EP 4 636 682 A1**

(12) **EUROPEAN PATENT APPLICATION**
published in accordance with Art. 153(4) EPC

(43) Date of publication:
**22.10.2025 Bulletin 2025/43**

(21) Application number: **23902547.1**

(22) Date of filing: **05.12.2023**

(51) International Patent Classification (IPC):
**G06T 3/00** (2024.01)

(52) Cooperative Patent Classification (CPC):
**G06F 3/0481; G06F 3/04845; G06F 3/04847;
G06T 3/00;** Y02T 10/40

(86) International application number:
**PCT/CN2023/136523**

(87) International publication number:
**WO 2024/125350 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2022 CN 202211602553**

(71) Applicant: **Beijing Zitiao Network Technology Co.,
Ltd.
Beijing 100190 (CN)**

(72) Inventors:
• **WEI, Zhixuan
Beijing 100028 (CN)**
• **LI, Kai
Beijing 100028 (CN)**
• **LIU, Bo
Beijing 100028 (CN)**
• **ZHANG, Xinghua
Beijing 100028 (CN)**
• **XU, Nan
Beijing 100028 (CN)**

(74) Representative: **Isarpatent
Patent- und Rechtsanwälte
Barth Hassa Peckmann & Partner mbB
Friedrichstraße 31
80801 München (DE)**

(54) **IMAGE PROCESSING METHOD AND APPARATUS, AND DEVICE AND MEDIUM**

(57) Embodiments of the present disclosure relate to an image processing method and apparatus, a device, and a medium. The method includes: acquiring an original image to be processed and a perspective correction direction of the original image, wherein the perspective correction direction includes a preset direction and/or a custom direction; acquiring image transformation information corresponding to the original image according to the perspective correction direction, wherein the image transformation information includes one or more of image scaling information, image rotation information, or target point position information; and obtaining a corrected image by performing correction processing on the original image based on the image transformation information. According to the embodiments of the present disclosure, a perspective correction effect can be effectively improved.

Acquire an original image to be processed and a perspective correction direction of the original image, wherein the perspective correction direction comprises a preset direction and/or a custom direction — S102

Acquire image transformation information corresponding to the original image according to the perspective correction direction — S104

Obtain a corrected image by performing correction processing on the original image based on the image transformation information — S106

**FIG. 1**

EP 4 636 682 A1

**Description**

This application claims priority to Chinese Patent Application No. 202211602553.5, entitled "IMAGE PROCESSING METHOD AND APPARATUS, DEVICE, AND MEDIUM", filed with the China National Intellectual Property Administration on December 13, 2022, the disclosure of which is incorporated by reference in its entirety.

FIELD

The present disclosure relates to the technical field of image processing, and in particular, to an image processing method and apparatus, a device, and a medium.

BACKGROUND

An increasing number of users will carry out post-processing, such as optimization, on captured images, with diverse optimization demands such as beauty enhancement, filter changes, and sticker adding. One optimization demand is to change the perspective effect of the images. For example, the user is not satisfied with an image of an object A photographed laterally and wishes to obtain an image of the object A photographed from the front. In other words, the user wishes to change the photographing angle of the image through a later image processing method, thereby obtaining an image with the perspective effect satisfying the demand. However, the current perspective correction effect is not good enough to satisfy the user demands.

SUMMARY

In order to solve the above technical problems or at least partially solve the above technical problems, the present disclosure provides an image processing method and apparatus, a device, and a medium.
In a first aspect, embodiments of the present disclosure provide an image processing method. The method includes: acquiring an original image to be processed and a perspective correction direction of the original image, wherein the perspective correction direction includes a preset direction and/or a custom direction; acquiring image transformation information corresponding to the original image according to the perspective correction direction, wherein the image transformation information includes one or more of image scaling information, image rotation information, or target point position information; and obtaining a corrected image by performing correction processing on the original image based on the image transformation information.
In a second aspect, embodiments of the present disclosure further provide an image processing apparatus, including a direction acquiring module, configured to acquire an original image to be processed and a perspective correction direction of the original image, wherein the perspective correction direction includes a preset direction and/or a custom direction; an information acquiring module, configured to acquire image transformation information corresponding to the original image according to the perspective correction direction, wherein the image transformation information includes one or more of image scaling information, image rotation information, or target point position information; and a correcting module, configured to obtain a corrected image by performing correction processing on the original image based on the image transformation information.
In a third aspect, embodiments of the present disclosure further provide an electronic device. The electronic device includes: a processor; and a memory, configured to store executable instructions of the processor. The processor is configured to read the executable instructions from the memory and execute the instructions to implement the image processing method provided in the embodiments of the present disclosure.
In a fourth aspect, embodiments of the present disclosure further provide a computer-readable storage medium. The storage medium stores a computer program. The computer program is used to perform the image processing method provided in the embodiments of the present disclosure.
According to the above technical solutions provided in the embodiments of the present disclosure, the image transformation information corresponding to the perspective correction direction of the original image can be determined, the image transformation information corresponding to different perspective correction directions may be different, and therefore perspective correction processing may be performed on the original image in a more targeted manner, and a perspective correction effect is effectively improved.
It should be understood that the content described in the part is not intended to identify key or important features of the embodiments of the present disclosure, nor is it intended to limit the scope of the present disclosure. Other features of the present disclosure are easier to understand through the following description.

# EP 4 636 682 A1

BRIEF DESCRIPTION OF THE DRAWINGS

The accompanying drawings herein are incorporated into the specification to form a part of the specification, illustrate embodiments conforming to the present disclosure, and are used to explain the principle of the present disclosure together with the specification.

In order to describe the technical solutions in the embodiments of the present disclosure or in the prior art more clearly, the accompanying drawings required to be used in descriptions of the embodiments or the prior art will be briefly introduced below, and it is apparent that those of ordinary skill in the art may also obtain other accompanying drawings according to these accompanying drawings without creative work.

FIG. 1 is a schematic flowchart of an image processing method according to an embodiment of the present disclosure;

FIG. 2 is a schematic diagram of a plane mapping relationship according to an embodiment of the present disclosure;

FIG. 3 is a schematic diagram of perspective transformation processing according to an embodiment of the present disclosure;

FIG. 4 is a schematic diagram of mask generation according to an embodiment of the present disclosure;

FIG. 5 is a schematic diagram of a black-and-white mask according to an embodiment of the present disclosure;

FIG. 6 is a schematic diagram of transparency gradual decrease according to an embodiment of the present disclosure;

FIG. 7 is a flowchart of image processing according to an embodiment of the present disclosure;

FIG. 8 is a schematic diagram of a structure of an image processing apparatus according to an embodiment of the present disclosure; and

FIG. 9 is a schematic diagram of a structure of an electronic device according to an embodiment of the present disclosure.

DETAILED DESCRIPTION OF EMBODIMENTS

To have a more clear understanding of the above objectives, features, and advantages of the present disclosure, the solution of the present disclosure is further described below. It should be noted that the embodiments and the features of the embodiments in the present disclosure may be mutually combined without conflicts.

Many specific details are elaborated in the following description to facilitate a full understanding of the present disclosure, but the present disclosure may also be implemented in methods different from those described herein. Apparently, the embodiments in the specification are only a part rather all of the embodiments of the present disclosure.

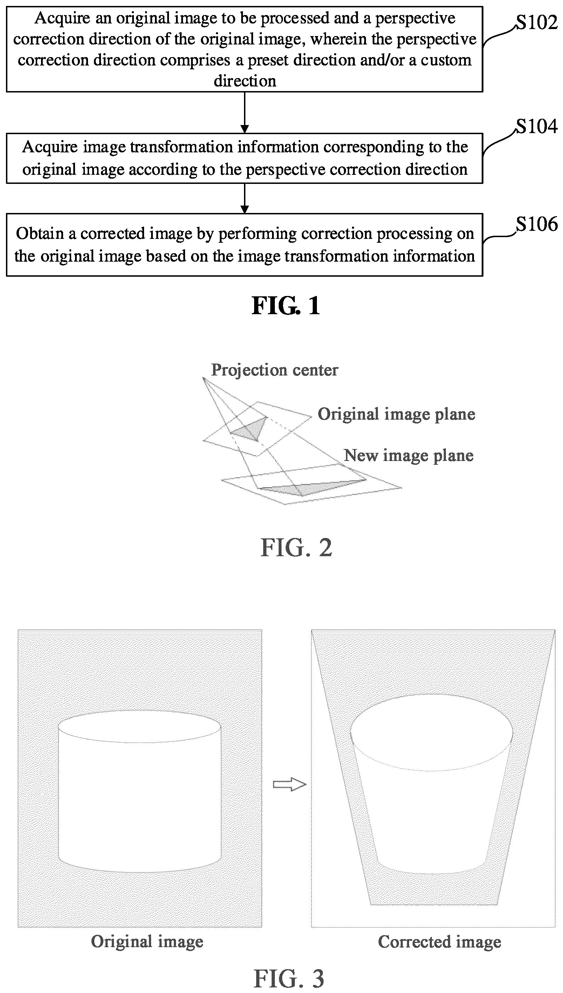

FIG. 1 is a schematic flowchart of an image processing method according to an embodiment of the present disclosure. The method may be performed by an image processing apparatus. The apparatus may be implemented by software and/or hardware, and is typically integrated in an electronic device. As shown in FIG. 1, the method mainly includes step S102 to step S106 as below.

Step S102: Acquire an original image to be processed and a perspective correction direction of the original image, wherein the perspective correction direction includes a preset direction and/or a custom direction.

In practical applications, the original image may be an image uploaded or specified by a user, with no limitations on the source of the original image herein. The embodiment of the present disclosure does not limit the content in the original image. The perspective correction direction may directly influence a perspective effect. It should be understood that typically, the perspective effect of a photographed object may be changed directly by using a shooting angle/shooting orientation of a camera. The intuitive perception of the perspective effect is that objects appear larger when they are closer and smaller when they are farther away. The effect of objects appearing larger when closer and smaller when farther, as captured in photographs, varies due to different shooting angles. For example, the perspective effect obtained when the camera directly faces the object for shooting differs from the perspective effect obtained when the camera shoots the object from top to bottom. In many cases, various factors such as space limitations and photography skills may cause the perspective effect of an image captured by the user to differ from the perspective effect that the user truly needs. Therefore, the user wants to change the perspective effect of the image through a post-processing method. Specifically, the user may set the perspective correction direction for adjusting the original image. The perspective correction direction may be a preset direction provided by an image editing application or a customized direction, thereby satisfying diverse requirements of the user.

In some specific implementation examples, the preset direction includes a horizontal direction and/or a vertical direction. The perspective effect presented in the horizontal direction may be understood as the camera shooting the object in a horizontal direction of the object, for example, the camera shoots the object on a left side of the object with a certain angle deflecting towards a right side of the object. The perspective effect presented in the vertical direction may be understood as the camera shooting the object in a vertical direction of the object, for example, the camera shoots the object with a certain pitching angle from top to bottom or from bottom to top. Additionally, the above horizontal direction and the above vertical direction should not be understood as being completely horizontal or vertical but may actually have some deviation within a certain angle range, which are not limited herein.

Step S104: Acquire image transformation information corresponding to the original image according to the perspective correction direction, wherein the image transformation information includes one or more of image scaling information, image rotation information, or target point position information.

To better perform image correction, the embodiment of the present disclosure fully considers features of the preset direction and the custom direction. The image transformation information used for perspective correction may differ for different directions. That is, firstly, the image transformation information required for perspective correction may be acquired in a targeted manner according to the perspective correction direction, thereby adopting different processing strategies. The processing strategies respectively corresponding to the preset direction and the custom direction are different and are used to indicate the method for performing perspective correction processing on the original image, thereby balancing processing accuracy and processing efficiency.

In some specific implementation examples, the image transformation information corresponding to the preset direction and the image transformation information corresponding to the custom direction are different, and correspondingly, spatial dimensions of the adopted processing strategies differ. The spatial dimension refers to the perspective of spatial dimension during image processing, such as three-dimensional space perspective and two-dimensional space perspective, and therefore image processing methods correspondingly differ. Exemplarily, when the preset direction includes the horizontal direction and/or the vertical direction and the perspective correction direction includes the preset direction, it is determined that the image transformation information corresponding to the perspective correction direction includes the image scaling information and/or the image rotation information, and it is further determined that a target processing strategy corresponding to the perspective correction direction includes performing perspective correction processing on the original image based on a three-dimensional space; and when the perspective correction direction includes the custom direction, it is determined that the image transformation information corresponding to the perspective correction direction includes the image scaling information and/or the image rotation information and the image transformation information includes the target point position information, and it is further determined that the target processing strategy corresponding to the perspective correction direction includes performing perspective correction processing on the original image based on a two-dimensional space. It should be understood that the embodiment of the present disclosure fully considers that for perspective correction in the horizontal/vertical direction, it is similar to simulating left-right/up-down translation of the camera in the three-dimensional space, and therefore processing image correction in the three-dimensional space is more convenient, thereby acquiring the image scaling information and/or the image rotation information for correction processing. For perspective correction in any direction, if processing is still performed in the three-dimensional space, extremely complex calculations are needed, and therefore the embodiment of the present disclosure starts from the perspective of two-dimensional space to acquire the target point position information for processing, wherein the target point position information includes plane position information of positions of target points located in both the original image and a corrected image respectively. By determining a positional transformation correspondence between pixels in a planar image, perspective correction processing in the custom direction is conveniently and efficiently achieved.

Through the above method, the image transformation information required in different directions may be determined, and the image transformation information is further acquired. In practical applications, the image transformation information may be determined based on user operations. For example, the image transformation information is acquired through the operation of the user on a specified control on an interface, or according to the operation of the user on the image, which is not limited herein.

Step S106: Obtain a corrected image by performing correction processing on the original image based on the image transformation information.

When the perspective correction direction corresponding to the original image is determined, the required image transformation information can be correspondingly determined, and the target processing strategy to be adopted can be further determined, thereby using the target processing strategy to perform perspective correction processing on the original image to obtain the corrected image.

According to the above technical solution provided in the embodiment of the present disclosure, the image transformation information corresponding to the perspective correction direction of the original image can be determined, the image transformation information corresponding to different perspective correction directions may be different, and therefore perspective correction processing may be performed on the original image in a more targeted manner, and a perspective correction effect is improved.

For ease of understanding, the following provides a detailed description of the image transformation information corresponding to the preset direction and the custom direction, as well as the methods for correcting the original image based on the image transformation information (processing strategies for short):

(1) Processing strategy corresponding to preset direction:

When the perspective correction direction includes the preset direction and the preset direction includes the horizontal direction and/or the vertical direction, the image transformation information includes the image scaling information and or the image rotation information.

During specific implementation, the image scaling information and/or the image rotation information corresponding to the preset direction may be first acquired. In practical applications, both the image scaling information and the image rotation information may be set by the user through the specified control on the interface. That is, the image scaling information and/or the image rotation information may be determined based on user operations. Exemplarily, a trigger control for the horizontal direction and a trigger control for the vertical direction may be respectively set on the interface, and meanwhile an adjustment control is set, and refers to the above specified control. Exemplarily, when the trigger control in the horizontal direction is in an activated state, if the user triggers the adjustment control, it is considered that the user sets the image scaling information and/or the image rotation information corresponding to the horizontal direction. The embodiment of the present disclosure does not limit the format of the specified control. For example, the specified control may be a slider control. The slider control is similar to a ruler capable of displaying scales. Each scale has a mapping relationship with information such as the image scaling information and the image rotation information, thereby facilitating the user to change the perspective effect by moving the position of a calibration point on a slider. In some specific implementation examples, the position of the calibration point on the slider can simultaneously have a mapping relationship with both the image scaling information and the image rotation information. In other words, the user can change both the image scaling information and the image rotation information simply by changing the position of the calibration point, which is extremely convenient and fast.

On the basis of acquiring the image transformation information, correction processing can be performed on the original image based on the image transformation information, which may be implemented with reference to the following steps a to c in some implementation examples:

Step a: Determine camera movement information according to the image rotation information. Since the object movement is relative, that is, when the object is expected to move leftwards in the view, it may be equivalent to moving the camera to the right. Therefore, the camera movement information may be determined based on the image rotation information.

Step b: Determine pixel point position transformation information of the original image according to the image scaling information and the camera movement information.

In some specific implementation examples, the image scaling information may be represented by a model transformation matrix (model_matrix) to express the scaling of the image itself. The camera movement information may be represented by a camera movement view matrix (abbreviated as a view matrix, view_matrix) to express the movement of the camera. Additionally, a preset perspective projection matrix (projection_matrix) may be combined to determine an image transformation matrix (mvp_matrix) that represents the pixel point position transformation information of the original image. Specifically, the image transformation matrix may be obtained based on the product of the model transformation matrix, the camera movement view matrix, and the perspective projection matrix. Additionally, it should be noted that in the embodiment of the present disclosure, fixed parameters for the perspective projection matrix may be preset without acquiring camera parameters or other information when the original image is captured. Primarily, the image scaling information and the image rotation information set by the user for the original image are determined according to the user operations to determine the above matrix. Additionally, it should be noted that image scaling can change an aspect ratio and should not be limited to proportional scaling.

Taking the user performing forward horizontal correction on the original image as an example, according to the embodiment of the present disclosure, the following operations may be performed on the original image: keeping a left edge of the original image stationary and slightly increasing the width of the original image (i.e., changing the model_matrix); and rotating with the left edge of the original image as the Y-axis (i.e., changing the view_matrix), and then combining the perspective projection matrix. The image transformation matrix is obtained based on the product of the three matrices, and corresponds to the pixel point position transformation information. The above width adjustment method and a rotation angle may be determined based on an operation result of the user for controls such as the slider.

Step c: Perform correction processing on the original image according to the pixel point position transformation information of the original image, wherein the correction processing is also known as perspective correction for the original image.

Specifically, the pixel point position transformation information represented based on the image transformation matrix may be transmitted as parameters to a graphics processing unit (GPU) for rendering processing, thereby achieving correction in the horizontal direction or the vertical direction.

The embodiment of the present disclosure fully considers that for the perspective correction in the preset direction such as the horizontal/vertical direction, it is similar to simulating the left-right/up-down translation of the camera in the three-dimensional space, and through the above method, the perspective correction processing in the preset direction can be conveniently and reliably achieved.

(2) Processing strategy corresponding to custom direction:

When the perspective correction direction includes the custom direction, the image transformation information includes the target point position information. During specific implementation, the target point position information corresponding to the custom direction may be first acquired. Exemplarily, the target point position information includes plane position information of positions of target points in located both the original image and the corrected image respectively, wherein the corrected image is an image obtained after performing perspective correction processing on the original image according to the custom direction. The corresponding plane position information of the target point in both the original image and the corrected image is determined based on the user dragging of a touch point on the original image. A point where the user touches the original image is the touch point. In some examples, the target point may be determined based on the touch point. The touch point is directly used as the target point, or a point having a preset association relationship with the touch point may also be used as the target point, which is not limited herein. Exemplarily, the target points may correspond to four vertices of the original image. The user may touch one or more vertices of the original image and drag the vertices in any direction according to needs to change vertex positions, thereby setting a custom perspective correction direction. Based on the user operation, the positions of the target point in both the original image and the corrected image may be determined, that is, a correspondence of the same point between the original image and the corrected image is determined, thereby further establishing a correspondence between the original image and the corrected image.

On the basis of acquiring the image transformation information, correction processing is performed on the original image based on the image transformation information, which may be implemented with reference to the following steps A to C in some implementation examples:

Step A: Determine a first matrix based on the plane position information, wherein the first matrix is used to represent a pixel transformation correspondence between the original image and the corrected image, and therefore the first matrix may be understood as a transformation matrix, and in some specific examples, the first matrix may be implemented using a homography matrix.

For ease of understanding, reference may also be made to a schematic diagram of a plane mapping relationship shown in FIG. 2, simply illustrating a mapping relationship between an original image plane and a new image plane in the case of changing the perspective effect, and for a specific method for determining a correspondence, reference may be made to the related art. It should be noted that FIG. 2 is merely a principle example, and is intended to indicate that the mapping relationship between the two planes may be processed based on the two-dimensional space, and specific principles are not repeated herein. In some specific implementation examples, on the basis of the known plane position information of the target points in both the original image and the corrected image, eight unknowns in the homography matrix may be determined according to the four target points, thereby obtaining the homography matrix. The homography matrix is a transformation matrix, and may be used for image correction. A correspondence between the two images may be determined using four corresponding point pairs. In the two-dimensional plane, the homography matrix is of size 3*3. Specifically, based on the positional relationship of the above target points in the two images, parameters in the homography matrix may be determined in the following method, wherein $a_{33}$ is a fixed value mainly used to determine $a_{11}$ to $a_{32}$,

$$\left[x',y',w'\right]=\left[u,v,w\right]\begin{bmatrix} a_{11} & a_{12} & a_{13} \\ a_{21} & a_{22} & a_{23} \\ a_{31} & a_{32} & a_{33} \end{bmatrix}$$

wherein x', y' as well as u, v may be respectively determined based on the plane position information of the target points in the original image and the corrected image, and w' and w may be considered as preset parameters. Through the above method, the homography matrix Mat may be obtained.

Step B: Obtain a second matrix by inverting the first matrix. The second matrix may be an inverse matrix.

It should be understood that the first matrix describes a pixel offset mode. For each pixel in the original image, the position of the pixel in the corrected image can be obtained by applying the first matrix, which is formulated as: Dst(x, y) = Mat * (x', y'), wherein (x', y') corresponds to pixel coordinates in the original image, and Dst(x, y) corresponds to pixel coordinates in the corrected image. However, the above formula is more suitable for serial computation and conflicts with an operating mode of the GPU. It should be understood that inherent characteristics of the GPU indicate that the GPU is applicable to parallel computation. In practical applications, the GPU can only obtain Dst(x, y) of the corrected image but cannot obtain the specific corresponding position (x', y') in the original image. Therefore, in the embodiment of the present disclosure, the first matrix is inverted, namely Mat-1*Dst(x, y) = (x', y'). Swapping left and right yields: (x', y') = Mat-1*Dst(x, y).

Through the above method, the GPU may rapidly determine the corresponding position of each pixel of the corrected image in the original image, and parallel processing may be directly performed on all the pixels on the CPU.

Step C: Perform correction processing on the original image based on the second matrix. It should be understood that when the second matrix (also known as the inverse matrix) is known, through the above method, the GPU can quickly determine pixel positions in the original image for pixels in the corrected image, and pixel colors are determined, thereby achieving perspective correction processing of the original image to obtain the corrected image.

Additionally, it should be noted that the inherent hardware characters of the CPU cause the CPU to perform serial computation only for whole pixels, that is, the CPU needs to calculate the position of each pixel individually and cannot process floating-point numbers, such as half pixels, and can only process full pixels. Consequently, the processing accuracy is relatively poor, and additionally, the processing efficiency of a serial processing method is also relatively low. The inherent hardware characters of the GPU allow the GPU to normalize images to the range from 0 to 1. That is, the floating-point numbers can be well processed, and parallel processing may be performed on all pixels, thereby increasing the processing speed. Compared with direct using the CPU for perspective correction processing, the embodiment of the present disclosure adopts the GPU for perspective correction processing, which not only provides a high processing speed but also achieves higher processing precision. Therefore, the phenomena such as aliasing and artifacts caused by the poor processing precision of the CPU can be reduced to a certain degree.

The embodiment of the present disclosure fully considers that for perspective correction in any direction, if processing is still performed in the three-dimensional space, extremely complex calculations are needed, and therefore starting from the perspective of two-dimensional space, by determining the transformation correspondence between the pixels of the planar image, perspective correction processing in the custom direction is conveniently and efficiently achieved, and the GPU is supported to be utilized for processing, thereby effectively improving the processing efficiency and the processing precision.

On the basis of the obtained corrected image, to further ensure the image correction effect, the embodiment of the present disclosure further includes: performing optimization processing on the corrected image, and obtaining a target image based on the optimized image, wherein the optimization processing includes edge optimization and/or filling of non-content areas. By correcting through the above method, the obtained corrected image may still have the problems such as edge aliasing or artifacts and blank areas (the non-content areas), and therefore, in the embodiment of the present disclosure, the corrected image may be further optimized, such that an effect of the target image displayed for the user is better. For ease of understanding, a detailed description is provided below.

Exemplarily, reference may be made to FIG. 3, which is a schematic diagram of perspective transformation processing, illustrating an original image and a corrected image obtained after perspective correction processing of the original image. Taking a photographed object being a frontally photographed cylindrical object as an example in the original image, the surrounding background of the cylindrical object is simply shown in gray in the figure, and by performing perspective correction processing on the original image, the corrected image is obtained; and after perspective processing, there is no content in a peripheral blank area of the corrected image, namely a non-content area. It should be understood that in practical applications, the corrected image obtained after perspective processing may have the cases such as edge aliasing or the emergence of the blank area (the non-content area). To present a good visual perception to the user, in the embodiment of the present disclosure, an edge of a content area (e.g., a trapezoid area in FIG. 3) may be optimized, and the non-content area may be further filled.

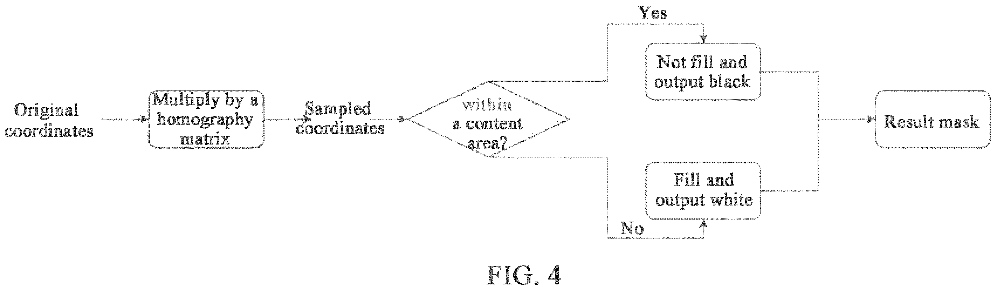

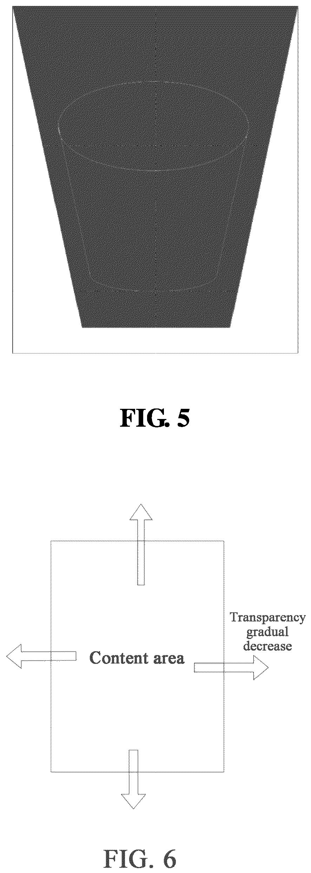

In practical applications, the content area and the non-content area in the corrected image may be identified based on a mask. For ease of understanding, reference may be made to FIG. 4, which is a schematic diagram of mask generation. Original coordinates in FIG. 4 are pixel coordinates in the original image. By multiplying the original coordinates by the homography matrix, sampled coordinates are obtained, and the sampled coordinates are pixel coordinates in the corrected image. Whether the pixel coordinates in the corrected image are located within the content area may be determined, if yes, no filling is needed, and black is outputted; and if no, filling is needed, and white is outputted, thereby obtaining a result mask (a black-and-white mask). Exemplarily, reference may be made to FIG. 5, which is a schematic diagram of a black-and-white mask. The function of the mask is to clearly distinguish the content area and the non-content area.

When the optimization processing includes edge optimization processing, performing optimization processing on the corrected image includes: performing transparency gradient processing on the content area of the corrected image, wherein the transparency of the content area decreases gradually in a direction from a center of the content area to an edge of the content area. The transparency of the edge of the content area is the lowest; and the transparency of a center part of the content area is the highest. For ease of understanding, reference may be made to FIG. 6, which is a schematic diagram of transparency gradual decrease. Through the method of gradual decrease of the transparency from the center of the content area to the edge of the content area, edge aliasing can be improved to a certain degree.

When the optimization processing includes filling processing of the non-content area, for optimization processing of the corrected image, reference may be made to step (1) and step (2) as below.

Step (1): Obtain an initially filled area by performing initial filling on the non-content area based on the content area using a preset matching algorithm. Exemplarily, the matching algorithm may be a stereo matching algorithm. Specifically, based on a core idea that adjacent pixels in an image have similarities, by utilizing the continuity of the image, content adjacent to the edge of the content area may be filled into the non-content area. That is, the matching algorithm is used to find an area that blends with the edge for initial filling. For ease of understanding, the following is a simple description of an implementation of the stereo matching algorithm. Firstly, in an initialization phase, each pixel in the original image is randomly assigned an offset, and a corresponding pixel is found in a result image; then, in a propagation phase, each pixel checks whether an offset from an adjacent block provides a better match, if yes, a patch offset of the adjacent block is adopted; and then, in a search phase, each pixel point finds a more matching offset within a concentric circle with an existing offset as the center to replace a current offset. Through the above method, pixel filling of the non-content area may be achieved. The content area corresponds to the original image, and the non-content area corresponds to the result image.

Step (2): Perform pixel optimization processing on the initially filled area using a preset deep learning algorithm.

The embodiment of the present disclosure fully considers that the effect of directly filling the non-content area using the matching algorithm may not be natural, and therefore the deep learning algorithm may be further adopted to optimize the initially filled area. The embodiment of the present disclosure does not limit the deep learning algorithm. For example, a neural network model may be trained in advance by using a training set. Exemplarily, the training set includes a first training image and a second training image. The first training image is an image with a blank area filled through the matching algorithm. For example, a sample image without a blank area may be acquired first, then a specified area in the sample image is converted into a blank area, thereby obtaining an image with the blank area, and subsequently, the blank area is filled using the matching algorithm to obtain the first training image. The second training image may be the above sample image without the blank area, which is an original image which is the most natural. An effect of optimizing the filled area of the first training image by the neural network model is supervised through the second training image, such that the neural network model can perform pixel optimization processing more accurately and vividly, thereby making a filling result of the blank area more natural.

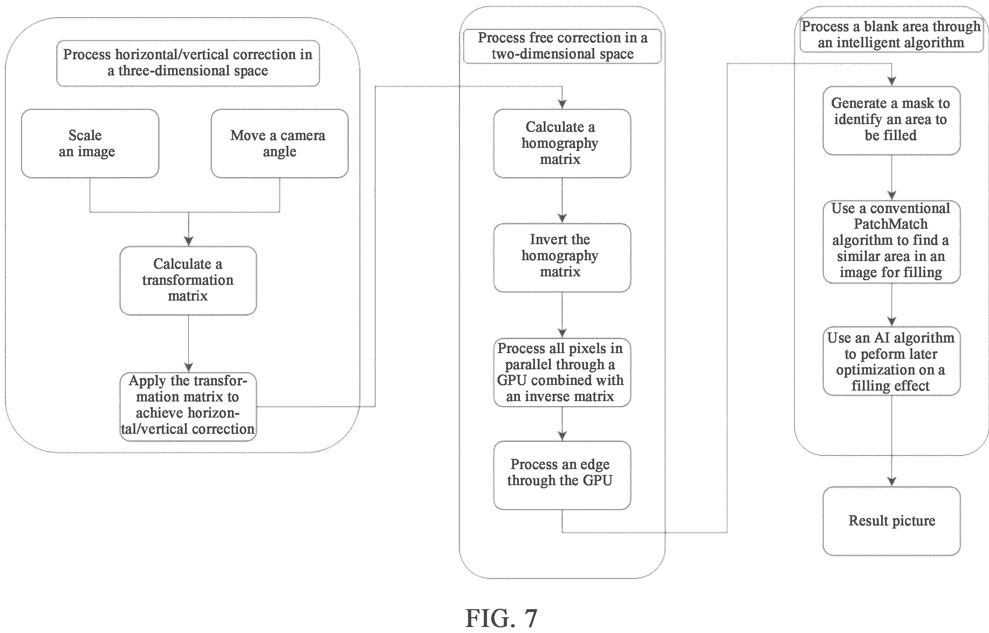

In summary, for ease of understanding, an embodiment of the present disclosure further provides a flowchart of image processing shown in FIG. 7. The flowchart illustrates that the user first performs perspective correction processing on the original image in the horizontal direction or the vertical direction, then performs perspective correction processing in the custom direction, and finally optimizes the image obtained after free correction processing. That is, FIG. 7 illustrates three key links: processing horizontal/vertical correction in the three-dimensional space, processing free correction in the two-dimensional space, and processing the blank area using an intelligent algorithm. During horizontal/vertical correction processing in the three-dimensional space, image scaling information and image rotation information corresponding to the original image may be acquired, and then a transformation matrix may be calculated by scaling the image and moving a camera angle (corresponding to image rotation), thereby applying the transformation matrix to achieve horizontal/vertical correction; then, an image obtained after horizontal/vertical correction may be directly used as an input for free correction (i.e., perspective correction processing in the custom direction), during free correction processing in the two-dimensional space, target point position information corresponding to the original image may be acquired, and on this basis, by calculating the homography matrix, inverting the homography matrix, processing all pixels in parallel through the GPU combined with the inverse matrix, and optimizing the edge through the GPU, an image with an optimized edge is obtained; and finally, an area to be filled (the above non-content area) of the image with the optimized edge may identified using the mask, and the matching algorithm is adopted to find a similar area in the image for filling, and finally, the deep learning algorithm is used to perform later optimization on a filling effect to obtain a result picture, and the result picture is the above target image. It should be noted that FIG. 7 is merely an implementation example applying the above image processing method provided in the embodiment of the present disclosure and should not be considered limiting. In practical applications, according to user requirements, horizontal/vertical correction may be performed only on the original image, or free correction is performed only on the original image, or free correction may be first performed, followed by horizontal/vertical correction. In addition, some steps in FIG. 7 may be reduced or adjusted. For example, due to processing resource limitations, edge optimization may not be performed, or alternative matching algorithms may be used.

It should be understood that based on the image processing method provided in the embodiment of the present disclosure, a perspective correction function in the preset direction (horizontal/vertical) and a perspective correction function in the custom direction may be provided for the user, the user may flexibly select one of the two functions or combine the two functions as needed to perform multi-time adjustment on the image. Specifically, assuming that the user first triggers the horizontal correction function to perform horizontal correction on an image A, in this case, the image A may be used as an original image to be processed, and the target processing strategy corresponding to the preset direction provided in the embodiment of the present disclosure is applied to process the image A, thereby obtaining an image A'. If the user subsequently triggers the custom correction function, in this case, the image A' may be reused as the original image to be processed, and the target processing strategy corresponding to the custom direction is adopted for processing, that is, the target image obtained after each processing may be reused as the original image for another correction processing function selected by the user to continue correction processing. Through the method, the user may perform repeated adjustments until the required perspective effect is achieved, thereby fully satisfying user requirements.

In summary, the above image processing method provided in the embodiment of the present disclosure can support perspective correction processing in fixed directions such as horizontal/vertical and any customized direction, meanwhile, perspective correction methods in the fixed directions and the custom direction are different, and therefore the processing efficiency and a display effect after image correction can be well balanced. Further, during custom perspective correction, the GPU may also be used for parallel computation based on the inverse matrix, which can not only increase the image processing speed but also further enhance the processing precision due to the capability of the GPU in calculating the floating-point numbers. Additionally, due to the method for performing transparency gradient processing on the edge, the phenomena of aliasing, artifacts, etc. can also be effectively reduced. In addition, the filling effect of the corrected blank area can be effectively ensured by combining a conventional algorithm and the deep learning algorithm.

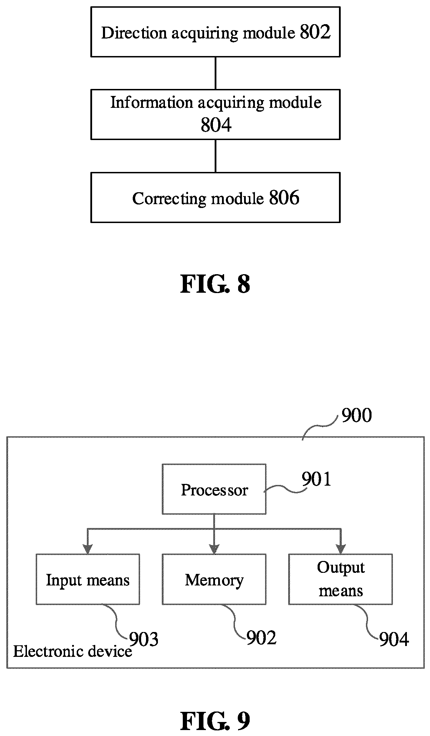

Corresponding to the above image processing method, FIG. 8 is a schematic diagram of a structure of an image processing apparatus according to an embodiment of the present disclosure. The apparatus may be implemented by software and/or hardware, is typically integrated in an electronic device, and as shown in FIG. 8, includes:

a direction acquiring module 802, configured to acquire an original image to be processed and a perspective correction direction of the original image, wherein the perspective correction direction includes a preset direction and/or a custom direction;

an information acquiring module 804, configured to acquire image transformation information corresponding to the original image according to the perspective correction direction, wherein the image transformation information includes one or more of image scaling information, image rotation information, or target point position information; and

a correcting module 806, configured to obtain a corrected image by performing correction processing on the original image based on the image transformation information.

According to the above technical solution provided in the embodiment of the present disclosure, the image transformation information corresponding to the perspective correction direction of the original image can be determined, the image transformation information corresponding to different perspective correction directions may be different, and therefore perspective correction processing may be performed on the original image in a more targeted manner, and a perspective correction effect is effectively improved.

In some implementations, when the perspective correction direction includes the preset direction, the image transformation information includes the image scaling information and/or the image rotation information; and when the perspective correction direction includes the custom direction, the image transformation information includes the target point position information.

In some implementations, the correcting module 806 is specifically configured to: determine camera movement information according to the image rotation information; determine pixel point position transformation information of the original image according to the image scaling information and the camera movement information; and perform perspective correction processing on the original image according to the pixel point position transformation information of the original image.

In some implementations, both the image scaling information and the image rotation information are set by the user through a specified control on an interface.

In some implementations, the correcting module 806 is specifically configured to: determine a first matrix based on the target point position information, wherein the target point position information includes plane position information of positions of target points located in both the original image and the corrected image respectively, and the first matrix is used to represent a pixel transformation correspondence between the original image and the corrected image; obtain a second matrix by inverting the first matrix; and perform correction processing on the original image based on the second matrix.

In some implementations, the target point position information is determined based on the user dragging of a touch point on the original image.

In some implementations, the apparatus further includes an optimization module, configured to perform optimization processing on the corrected image, and obtaining a target image based on the optimized image, wherein the optimization processing includes edge optimization processing and/or filling processing for a non-content area.

In some implementations, when the optimization processing includes the edge optimization processing, the optimization module is specifically configured to: perform transparency gradient processing on a content area of the corrected image, wherein the transparency of the content area decreases gradually in a direction from a center of the content area to an edge of the content area.

In some implementations, when the optimization processing includes the filling processing of the non-content area, the optimization module is specifically configured to: obtain an initially filled area by performing initial filling on the non-content area based on the content area using a preset matching algorithm; and performing pixel optimization processing on the initially filled area using a preset deep learning algorithm.

The image processing apparatus provided in the embodiment of the present disclosure may perform the image processing method provided in any embodiment of the present disclosure, and has the corresponding functional modules and beneficial effects for performing the method.

Those skilled in the art should clearly understand that for the convenience and brevity of descriptions, regarding the specific working process of the apparatus embodiment described above, reference may be made to the corresponding process in the method embodiment, which is repeated herein.

FIG. 9 is a schematic diagram of a structure of an electronic device according to an embodiment of the present disclosure. As shown in FIG. 9, the electronic device 900 includes one or more processors 901 and a memory 902.

The processor 901 may be a central processing unit (CPU) or other forms of processing units with data processing capabilities and/or instruction execution capabilities, and may control other components in the electronic device 900 to perform desired functions.

The memory 902 may include one or more computer program products. The computer program product may include various forms of computer-readable storage media, such as a volatile memory and/or a non-volatile memory. The volatile memory may include, for example, a random access memory (RAM) and/or a high-speed cache memory (cache).The non-volatile memory may include, for example, a read only memory (ROM), a hard drive, and a flash memory. The computer-readable storage medium may store one or more computer program instructions. The processor 901 may run the program instructions to implement the above image processing method according to the embodiment of the present disclosure and/or other desired functions. The computer-readable storage medium may also store various contents such as an input signal, a signal component, and a noise component.

In an example, the electronic device 900 may also include: an input means 903 and an output means 904. These components are interconnected through a bus system and/or other forms of connection mechanisms (not shown).

Additionally, the input means 903 may also include, for example, a keyboard and a mouse.

The output means 904 may externally output various information, including determined distance information, direction information, etc. The output means 904 may include, for example, a display, a speaker, a printer, a communication network and a remote output device connected to it, etc.

Certainly, for simplification, FIG. 9 only illustrates some of components of the electronic device 900 relevant to the present disclosure, and components such as a bus and an input/output interface are omitted.In addition, the electronic device 900 may also include any other appropriate component according to specific application situations.

In addition to the above method and device, an embodiment of the present disclosure may also be a computer program product, including computer program instructions. The computer program instructions, when run by a processor, cause the processor to perform the image processing method provided in the embodiment of the present disclosure.

The computer program product may write, with any combination of one or more programming languages, program code used to perform the operations of the embodiments of the present disclosure. The programming languages include object-oriented programming languages, such as Java and C++, and further include conventional procedural programming languages, such as "C" language or similar programming languages.The program code may be executed entirely on a user computing device, partly on user equipment, as a stand-alone software package, partly on the user computing device and partly on a remote computing device, or entirely on the remote computing device or a server.

Additionally, an embodiment of the present disclosure may also be a computer-readable storage medium, having computer program instructions stored therein. The computer program instructions, when run by a processor, cause the processor to perform the image processing method provided in the embodiment of the present disclosure.

The computer-readable storage medium may adopt any combination of one or more readable media. The readable medium may be a readable signal medium or a readable storage medium. The readable storage medium may include, for example, but is not limited to, electric, magnetic, optical, electromagnetic, infrared, or semiconductor systems, apparatuses, or devices, or any combination of the above. More specific examples (a non-exhaustive list) of the readable storage medium include: an electrical connection with one or more wires, a portable disk, a hard drive, a random access memory (RAM), a read only memory (ROM), an erasable programmable read only memory (EPROM or a flash), optical fiber, a portable compact disc read only memory (CD-ROM), an optical storage device, a magnetic storage device, or any proper combination of the above.

An embodiment of the present disclosure further provides a computer program product including a computer program/instruction. The computer program/instruction, when executed by a processor, implements the image processing method in the embodiment of the present disclosure.

It should be noted that herein, relational terms such as "first" and "second" are used only to distinguish one entity or operation from another and do not necessarily require or imply any actual relationship or order between these entities or operations. In addition, the terms "comprise", "include", or any other variations thereof are intended to cover non-exclusive inclusions, and therefore a process, a method, an article, or a device including a series of elements not only includes those elements but also includes other elements not clearly listed, or further includes elements inherent to the process, the method, the article, or the device. In the absence of further restrictions, an element specified by the phrase "including a..." does not exclude the existence of other identical elements in the process, the method, the article, or the device that includes the element.

The above contents are merely specific implementations of the present disclosure, such that those skilled in the art can understand or implement the present disclosure. More modifications for these embodiments are apparent to those skilled in the art, and general principles defined herein may be implemented in other embodiments without departing from the spirit or scope of the present disclosure. Therefore, the present disclosure will not be limited by these embodiments described herein but is required to conform to a widest scope consistent with the principles and novel characteristics disclosed herein.

**Claims**

1. An image processing method, comprising:

   acquiring an original image to be processed and a perspective correction direction of the original image, the perspective correction direction comprising a preset direction and/or a custom direction;
   acquiring image transformation information corresponding to the original image based on the perspective correction direction, the image transformation information comprising one or more of image scaling information, image rotation information, or target point position information; and
   obtaining a corrected image by performing correction processing on the original image based on the image transformation information.

2. The method of claim 1, wherein the preset direction comprises a horizontal direction and/or a vertical direction.

3. The method of claim 2, wherein in a case of the perspective correction direction comprising the preset direction, the image transformation information comprises image scaling information and/or image rotation information; and wherein in a case of the perspective correction direction comprising the custom direction, the image transformation information comprises target point position information.

4. The method of claim 3, wherein in a case of the correction direction comprising the preset direction, the performing correction processing on the original image based on the image transformation information comprises:

   determining camera movement information based on the image rotation information;
   determining pixel point position transformation information of the original image based on the image scaling information and the camera movement information; and
   performing correction processing on the original image based on the pixel point position transformation information of the original image.

5. The method of claim 4, wherein the image rotation information is set by a user through a specified control on an interface.

6. The method of claim 3, wherein in a case of the correction direction comprising the custom direction, the performing correction processing on the original image based on the image transformation information comprises:

determining a first matrix based on the target point position information, wherein the target point position information comprises plane position information of positions of target points located in both the original image and the corrected image respectively, and the first matrix is used to represent a pixel transformation correspondence between the original image and the corrected image;
obtaining a second matrix by inverting the first matrix; and
performing correction processing on the original image based on the second matrix.

7. The method of claim 6, wherein the target point position information is determined based on a user dragging of a touch point on the original image.

8. The method of any of claims 1-7, further comprising:
performing optimization processing on the corrected image, and obtaining a target image based on the optimized image, wherein the optimization processing comprises edge optimization processing and/or filling processing for a non-content area.

9. The method of claim 8, wherein the optimization processing comprises the edge optimization processing, the performing optimization processing on the corrected image comprises:
performing transparency gradient processing on a content area of the corrected image, wherein a transparency of the content area decreases gradually in a direction from a center of the content area to an edge of the content area.

10. The method of claim 8, wherein the optimization processing comprises the filling processing of the non-content area, the performing optimization processing on the corrected image comprises:

obtaining an initially filled area by performing initial filling on the non-content area based on the content area using a preset matching algorithm; and
performing pixel optimization processing on the initially filled area using a preset deep learning algorithm.

11. An image processing apparatus, comprising:

a direction acquiring module configured to acquire an original image to be processed and a perspective correction direction of the original image, the perspective correction direction comprising a preset direction and/or a custom direction;
an information acquiring module configured to acquire image transformation information corresponding to the original image based on the perspective correction direction, the image transformation information comprising one or more of image scaling information, image rotation information, or target point position information; and
a correcting module configured to obtain a corrected image by performing correction processing on the original image based on the image transformation information.

12. An electronic device, comprising

a processor; and
a memory, configured to store instructions executable by the processor,
wherein the processor is configured to read the executable instructions from the memory, and execute the instructions to implement the image processing method of any of claims 1-10.

13. A computer-readable storage medium, wherein the storage medium stores a computer program, and the computer program is configured to perform the image processing method of any of claims 1-10.

14. A computer program product, wherein the computer program product is tangibly stored on a non-transitory computer-readable medium and comprises machine-executable instructions, the machine-executable instructions, when executed, cause a machine to perform the image processing method of any of claims 1-10.

Acquire an original image to be processed and a perspective correction direction of the original image, wherein the perspective correction direction comprises a preset direction and/or a custom direction ⟍S102

Acquire image transformation information corresponding to the original image according to the perspective correction direction ⟍S104

Obtain a corrected image by performing correction processing on the original image based on the image transformation information ⟍S106

**FIG. 1**

Projection center

Original image plane

New image plane

**FIG. 2**

Original image                    Corrected image

**FIG. 3**

```
                                                              Yes
                                                               ┌──────────────┐
                                                               │ Not fill and │
                                                               │ output black │
┌──────────┐    ┌──────────────┐    ┌──────────┐    ◇─────────┐└──────────────┘
│ Original │ →  │ Multiply by a│ →  │ Sampled  │ → │ within   │              → ┌─────────────┐
│coordinates│    │ homography   │    │coordinates│   │a content │               │ Result mask │
└──────────┘    │   matrix     │    └──────────┘    │  area?   │               └─────────────┘
                └──────────────┘                    ◇─────────┘┌──────────────┐
                                                               │ Fill and     │
                                                               │ output white │
                                                      No        └──────────────┘
```

FIG. 4

**FIG. 5**

FIG. 6

Process horizontal/vertical correction in a three-dimensional space

Scale an image

Move a camera angle

Calculate a transformation matrix

Apply the transformation matrix to achieve horizontal/vertical correction

Process free correction in a two-dimensional space

Calculate a homography matrix

Invert the homography matrix

Process all pixels in parallel through a GPU combined with an inverse matrix

Process an edge through the GPU

Process a blank area through an intelligent algorithm

Generate a mask to identify an area to be filled

Use a conventional PatchMatch algorithm to find a similar area in an image for filling

Use an AI algorithm to peform later optimization on a filling effect

Result picture

FIG. 7

Direction acquiring module 802

Information acquiring module 804

Correcting module 806

**FIG. 8**

900

Processor 901

Input means 903

Memory 902

Output means 904

Electronic device

**FIG. 9**

## INTERNATIONAL SEARCH REPORT

| International application No. |
|---|
| **PCT/CN2023/136523** |

### A. CLASSIFICATION OF SUBJECT MATTER

G06T 3/00(2024.01)i

According to International Patent Classification (IPC) or to both national classification and IPC

### B. FIELDS SEARCHED

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 图像, 透视, 矫正, 方向, 旋转, 缩放, 顶点, 位置, 拖动, 变换, 矩阵, 移动, image, perspective, correction, direction, rotation, scale, position, drag, transform, matrix, movement

### C. DOCUMENTS CONSIDERED TO BE RELEVANT

| Category* | Citation of document, with indication, where appropriate, of the relevant passages | Relevant to claim No. |
|---|---|---|
| PX | CN 115984096 A (BEIJING BYTEDANCE NETWORK TECHNOLOGY CO., LTD.) 18 April 2023 (2023-04-18)<br>claims 1-13 | 1-14 |
| X | CN 112433662 A (BEIJING DAJIA INTERNET INFORMATION TECHNOLOGY CO., LTD.) 02 March 2021 (2021-03-02)<br>description, paragraphs [0062]-[0136] | 1-14 |
| A | CN 111681186 A (AINNOVATION (BEIJING) TECHNOLOGY CO., LTD.) 18 September 2020 (2020-09-18)<br>entire document | 1-14 |
| A | US 2022051372 A1 (NIANTIC, INC.) 17 February 2022 (2022-02-17)<br>entire document | 1-14 |
| A | CN 113850220 A (SHANGHAI WESTWELL INFORMATION TECHNOLOGY CO., LTD.) 28 December 2021 (2021-12-28)<br>entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 February 2024** | **07 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
|---|
| **PCT/CN2023/136523** |

| Patent document cited in search report | | | Publication date (day/month/year) | Patent family member(s) | | | Publication date (day/month/year) |
|---|---|---|---|---|---|---|---|
| CN | 115984096 | A | 18 April 2023 | None | | | |
| CN | 112433662 | A | 02 March 2021 | None | | | |
| CN | 111681186 | A | 18 September 2020 | None | | | |
| US | 2022051372 | A1 | 17 February 2022 | WO | 2022034481 | A1 | 17 February 2022 |
| | | | | TW | 202215372 | A | 16 April 2022 |
| CN | 113850220 | A | 28 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211602553